# EUROPÄISCHE PATENTSCHRIFT

(11) **EP 2 303 066 B1**
(45) Veröffentlichungstag und Bekanntmachung des Hinweises auf die Patenterteilung: **22.03.2017**
(21) Anmeldenummer: 09761311.1
(22) Anmeldetag: 04.06.2009
(51) Int. Cl.: A47B 88/463, F03G 7/06

(54) **BETÄTIGUNGSVORRICHTUNG FÜR MÖBELSTÜCKTEILE MIT MINDESTENS EINEM FORMGEDÄCHTNISELEMENT**
ACTUATING MECHANISM FOR FURNITURE PIECES WITH AT LEAST ONE SHAPE MEMORY ELEMENT
DISPOSITIF D'ACTIONNEMENT POUR PARTIES DE MEUBLES, DOTÉ D'AU MOINS UN ÉLÉMENT À MÉMOIRE DE FORME

(30) Priorität: 10.06.2008 DE 102008027541
(43) Veröffentlichungstag der Anmeldung: 06.04.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2009/000767
(87) Internationale Veröffentlichungsnummer: WO 2009/149689

(56) Entgegenhaltungen:
- DE-A1- 19 935 119
- DE-T2- 60 118 836

## Beschreibung

Die Erfindung betrifft eine Betätigungsvorrichtung, die ein bewegliches Möbelstückteil gegenüber einem ortsfesten Möbelstückteil mittels einer ein Formgedächtniselement aufweisenden Antriebsvorrichtung in eine Öffnungs- oder eine Schließrichtung in Bewegung versetzt.

Aus der DE 601 18 836 T2 ist eine Betätigungsvorrichtung, u.a. zum Öffnen einer Schiebetür, mit einem bandförmigen Formgedächtniselement bekannt. Dazu kämmt auf einer an der Schiebetür angeordneten Zahnstange ein Stirnrad, das wiederum in ein weiteres Stirnrad eingreift. Die beiden Stirnräder sind s-förmig von dem bandförmigen Formgedächtniselement umwickelt, wobei jede Umschlingung kleiner als 360 Winkelgrade ist. Im kalten Zustand hat das Band die beschriebene S-Form. Wird das Band erhitzt, kehren sich am Band die Krümmungen um, d.h. die bisherige S-Form wird um die S-Längsachse gespiegelt. In der Folge drehen sich die Zahnräder um den jeweiligen Umschlingungswinkel und treiben somit die Schiebetür an. Der Vorgang ist reversibel.

Die DE 199 35 119 Al beschreibt eine Vorrichtung zum Öffnen und Verschließen eines Verschlusselementes, insbesondere einer Schublade. Die Vorrichtung hat ein Auslöseelement und eine Antriebseinheit, wobei Letztere eine Schraubenfeder ist, die aus einem Formgedächtnismetall hergestellt ist. Bei einer Erhitzung der Schraubendruckfeder mittels eines Kurzschlussstromes längt sich die Schraubendruckfeder, um die Schublade aufzustoßen. Bei diesem Vorgang spannt die beheizbare Schraubendruckfeder eine Zugfeder, die die später erkaltende Schraubendruckfeder wieder in ihre Ausgangslage bringt.

Der vorliegenden Erfindung liegt das Problem zugrunde, eine Betätigungseinrichtung zum Öffnen oder Schließen von Möbelstückteilen zu entwickeln, deren Antriebsvorrichtung als Antrieb oder zum Aufladen eines Speicherantriebs mindestens ein Formgedächtniselement aufweist.

Das Problem wird mit den Merkmalen des Anspruchs 1 gelöst. Dabei ist entweder die Antriebsvorrichtung am ortsfesten Möbelstückteil fixiert und liegt am beweglichen Möbelstückteil über ein antriebsseitiges Kupplungselement zeitweise an oder die Antriebsvorrichtung ist am bewegliche Möbelstückteil fixiert und liegt am ortsfesten Möbelstückteil über ein antriebsseitiges Kupplungselement zeitweise an. Die Antriebsvorrichtung weist als ein das Möbelstückteil bewegendes Antriebselement entweder ein sich bei Erwärmung verkürzendes Formgedächtniselement oder einen Federspeicher auf, wobei der Federspeicher durch mindestens ein sich bei Erwärmung verkürzendes Formgedächtniselement gespannt wird. Das Formgedächtniselement besteht aus einem Zugdraht oder einem Bündel von Zugdrähten.

Gemäß der vorliegenden Erfindung wird innerhalb einer Betätigungsvorrichtung in einem ersten Fall eine Antriebsvorrichtung vorgestellt, die mit Hilfe eines oder mehrerer Formgedächtniselemente eine krafterzeugende Linearbewegung durchführt. Die Linearbewegung wird direkt oder mittels eines Getriebes auf dasjenige Möbelstückteil übertragen, das beweglich an dem Möbelstückteil gelagert ist, das die Antriebsvorrichtung trägt. Das ggf. verwendete Getriebe der Antriebsvorrichtung kann z.B. ein Hebelgetriebe, ein Zahnstangengetriebe oder dergleichen sein.
Für den Linearhub, der dem Arbeitshub des Formgedächtniselements entgegenwirkt, wird z.B. ein Federantrieb, ein Schwerkraftantrieb oder auch ein zweites Formgedächtniselement eingesetzt.

In einem zweiten Fall wird eine Antriebsvorrichtung vorgestellt, die die Öffnungsbewegung des beweglichen Möbelteils mittels Federkraft bewirkt. Hierzu wird z.B. ein Federspeicher in Form einer mechanischen Feder oder einer Gasdruckfeder verwendet. Um den benutzten, entspannten Federspeicher wieder zu spannen wird ein Formgedächtniselement verwendet.

Die ortsfesten Möbelstückteile eines Möbelstücks sind z.B. der Korpus eines Schrankes, der Korpus eines Schreibtisches oder auch ein Türrahmen. Die beweglichen Möbelstückteile sind Schubladen, Schiebetüren, Dreh- oder Schwenktüren, Klappen, Ausfahrtische oder andere bewegliche Teile, die für einen bestimmten Zweck aus dem ortsfesten Möbelstückteil herausgeschwenkt oder herausgefahren werden.

Die Antriebsvorrichtung wird in der Regel am ortsfesten Möbelstückteil angeordnet. Es ist jedoch auch denkbar, die Antriebsvorrichtung am beweglichen Möbelstückteil zu befestigen, um sich dann vom ortsfesten Möbelstückteil abzustoßen.

Die eine Linearbewegung ausführenden Formgedächtniselemente, die z.B. zum Öffnen von Schublagen verwendet werden, können im Korpus neben, hinter, über oder unter der Schublade angeordnet werden. Dabei kann ihre Längsrichtung parallel, quer oder schräg zur Schubladenöffnungsrichtung orientiert sein. Es ist auch denkbar, die Formgedächtniselemente an der Korpusrückwand entlang über mehrere Schubladen vertikal oder diagonal zur Korpusform zu verlegen.

Weitere Einzelheiten der Erfindung ergeben sich aus den Unteransprüchen und den nachfolgenden Beschreibungen mehrerer schematisch dargestellter Ausführungsformen.
- Figur 1:: Antriebsvorrichtung mit direktem Zugdrahtantrieb bei geschlossener Schublade;
- Figur 2:: wie Figur 1, jedoch bei angetrieben ausfahrender Schublade;
- Figur 3:: wie Figur 2, jedoch bei nicht mehr angetrieben ausfahrender Schublade;
- Figur 4:: Antriebsvorrichtung mit einem über einen Hebel wirkenden Zugdrahtantrieb bei geschlossener Schublade;
- Figur 5:: wie Figur 4, jedoch mit maximal ausgeschwenktem Hebel;
- Figur 6:: wie Figur 5, jedoch mit zurückschwenkendem Hebel;
- Figur 7:: wie Figur 6, jedoch mit zurückgeschwenktem Hebel;
- Figur 8:: wie Figur 6, jedoch mit sich längendem Zugdraht;
- Figur 9:: Antriebsvorrichtung mit einem über einen gebogenen Hebel wirkenden Zugdrahtantrieb bei geschlossener Schublade;
- Figur 10:: Gehäuse zu Figur 9;
- Figur 11:: Schubschlitten zu Figur 9;
- Figur 12:: Schiebeklinke zu Figur 9;
- Figur 13:: wie Figur 9, jedoch mit ausgeschwenktem Hebel;
- Figur 14:: wie Figur 13, jedoch mit zurückgeschwenktem Hebel;
- Figur 15:: Antriebsvorrichtung mit einem abrollenden Zugdrahtantrieb und verschiebbarem Auswerfhebel;
- Figur 16:: Längsschnitt zu Figur 15;
- Figur 17:: wie Figur 15, jedoch bei nicht mehr angetriebener ausfahrender Schublade;
- Figur 18:: wie Figur 17, jedoch beim Zurückschieben des Auswerfhebels;
- Figur 19:: Betätigungssvorrichtung mit einem umlaufenden Aufschiebezapfen;
- Figur 20:: Längsschnitt zu Figur 19;
- Figur 21:: wie Figur 19, jedoch mit verkürztem Zugdraht;
- Figur 22:: wie Figur 21, jedoch beim zurückgleitenden Schubschlitten;
- Figur 23:: wie Figur 17, jedoch bei sich schließender Schublade;
- Figur 24:: Betätigungsvorrichtung mit Federantrieb zum Öffnen einer Schublade;
- Figur 25:: wie Figur 24, jedoch beim Spannen der Antriebesfeder;
- Figur 26:: geschlossene Schublade mit jeweils einer Betätigungsvorrichtung zum Öffnen und einer zum Schließen;
- Figur 27:: schließende Schublade zu Figur 26.

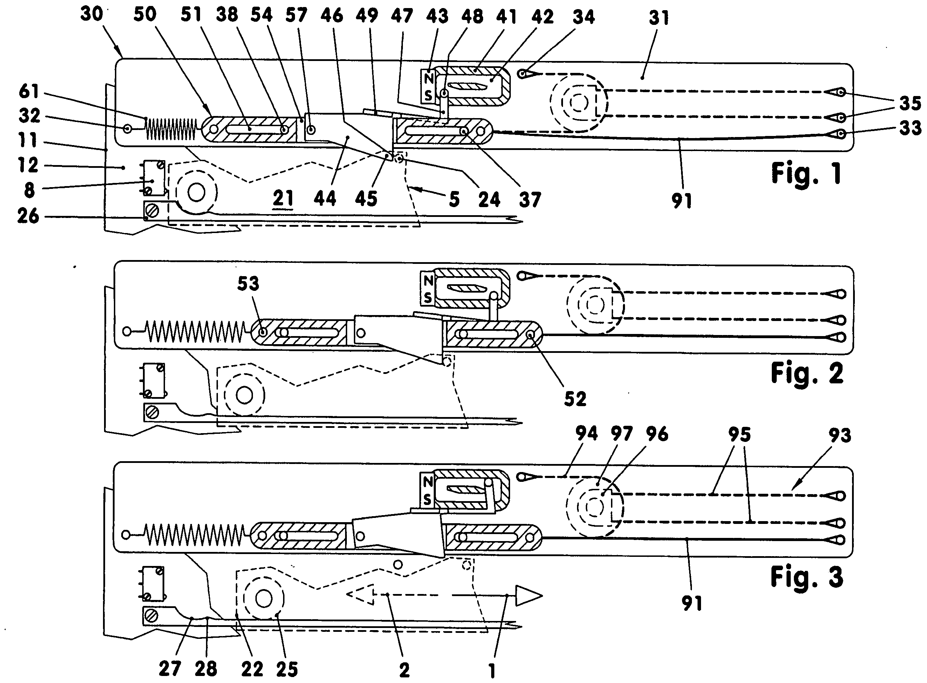

Die Figur 1 zeigt eine Betätigungsvorrichtung zum elektrischen Öffnen einer Schublade (21) eines Unterschrankes (10), bei der die Antriebsvorrichtung (30) als Antriebselement z.B. einen speziellen Zugdraht (91) aufweist. Der Zugdraht (91) ist aus einer Formgedächtnislegierung, z.B. einer Nickel-Titan-Legierung, gefertigt. Der Zugdraht (91) kann alleine aufgrund eines Temperaturwechsels zwischen einer gedehnten Kaltform und einer geschrumpften Warmform hin- und her schalten. Zum Aufheizen wird der Zugdraht (91) über seine Enden kurzzeitig bestromt. Die Anschlussdrähte sind hier nicht dargestellt.

Die Betätigungsvorrichtung sitzt nach Figur 1 z.B. an einer Seitenwand (13) eines Unterschrankkorpus (11). An dieser Seitenwand (13) ist auch eine die Schublade (21) tragende Führungsschiene (26) befestigt. In der Führungsschiene (26) laufen die Tragrollen (25) der Schublade (21).

Die Betätigungsvorrichtung ist auf einem Gestell oder einer Platte (31) aufgebaut. Auf der Platte (31) sind einige Haltebolzen (32-35), zwei Führungsbolzen (37, 38), eine Klinkenkulisse (41) und ein Magnet (43) befestigt.

Die Führungsbolzen (37, 38) führen einen beispielsweise parallel zu den Schubladenbewegungsrichtungen (1, 2) verschiebbaren Schubschlitten (50). Dazu hat der Schubschlitten (50) zwei Langlöcher (51), die jeweils die entsprechenden Führungsbolzen (37, 38) mit Spiel umgeben. Vorn und hinten hat der Schubschlitten (50) jeweils eine Bohrung (52, 53). In der hinteren Bohrung (53) ist z.B. eine Schraubenzugfeder (61) eingehängt, die wiederum an dem Haltebolzen (32) angelenkt ist. In der anderen Bohrung (52) ist der Zugdraht (91) befestigt. Sein rechtes Ende sitzt über eine Öse auf dem Haltebolzen (33).

Im mittleren Bereich hat der Schubschlitten (50) eine Ausnehmung (54), in der als Schubelement eine Klinke (44) schwenkbar gelagert ist. Die Klinke (44) sitzt dazu gelenkig auf einem Klinkenschwenkbolzen (57). Sie hat eine hier nach unten aus der Ausnehmung (54) mittels Schwerkraft herausragende Schubnase (45), deren Vorderkante (46) nach Figur 1 vor einem Mitnahmezapfen (24) der Schublade (21) positioniert ist. Im rechten Bereich der Klinke (44) ist ein z.B. nach oben abgewinkelter Kragarm (47) angeordnet, der in einem quer zum Kragarm (47) ausgerichteten Kulissenzapfen (48) endet. Auf der Oberseite der Klinke (44) sitzt im Bereich der Kragarmanlenkung eine magnetische oder magnetisierbare Entsperrplatte (49).

Der Kulissenzapfen (48) ist hier in einem in der Klinkenkulisse (41) eingearbeiteten Kulissenkanal (42) geführt. Im Kulissenkanal (42) bewegt sich der Kulissenzapfen (48) auf einer im Wesentlichen rechteckförmigen, endlosen Bahnkurve.

Nach Figur 1 befindet sich die Schublade (21) in ihrer Schließstellung. Dabei steht die hintere Tragrolle (25) im tiefsten Punkt einer Senke (27) der Führungsschiene (26), vgl. auch Figur 3. Die Senke (27) hat hier eine Krümmung, die größer ist als der Radius der Tragrolle (25). In Öffnungsrichtung vor der Senke (27) befindet sich eine Überhöhung (28).

Die Schraubenzugfeder (61) hält den Schubschlitten (50) in seiner hinteren Position. Die Vorderkante (46) der Schubnase (45) liegt vor dem Mitnahmezapfen (24) der Schublade (21). Der Zugdraht (91) ist kalt.

Wird nun die Schublade (21) zum Öffnen wenige zehntel Millimeter über die Schließstellung (5) hinaus bewegt, betätigt die Rückwand (22) der Schublade (21) oder ein vergleichbarer Schubladenbereich einen Schalter (8), der über eine nachgeordnete Schaltung eine Bestromung des Zugdrahts (91) auslöst. In der Folge verkürzt sich der Zugdraht (91). Dabei schiebt der sich nach rechts bewegende Schubschlitten (50) die Schublade (21) mittels des Schubelements (44) über die Überhöhung(28) und beschleunigt somit die Schublade (21) in Öffnungsrichtung (1). Die Schublade (21) öffnet sich und der Kulissenzapfen (48) bewegt sich im unteren Bereich des Kulissenkanals (42) nach rechts. Der Schubschlitten (50) gelangt hierbei zunehmend mit der Entsperrplatte (49) in den Wirkungsbereich des Magneten (43). Letzterer kann auch ein Elektromagnet sein.

Sobald sich bei ausfahrender Schublade (21) der Mitnahmezapfen (24) von der Schubnase (45) löst - das Zusammenziehen des Zugdrahtes (91) ist beendet - zieht der Magnet (43) die Entsperrplatte (49) an. Die Klinke (44) wird um den Klinkenschwenkbolzen (57) nach oben geschwenkt. Der Kulissenzapfen (48) gelangt in den oberen Bereich des Kulissenkanals (42). Die Schubnase (45) ist nun so weit angehoben, dass sich der Mitnahmezapfen (24) und die Schublade (21) berührungslos unter ihr hindurchbewegen können.

Zwischenzeitlich beginnt die Abkühlphase des Zugdrahtes (91). Die Schraubenzugfeder (61) zieht - entsprechend der zunehmenden Längung des Zugdrahtes (91) - den Schubschlitten (50) nach links in dessen Ausgangslage zurück. Der Kulissenzapfen (48) bewegt sich entlang des oberen Bereiches des Kulissenkanals (42). Dies gilt auch dann, wenn sich die Entsperrplatte (49) vom Magnet (43) gelöst hat. Das rückwärtige Ende der Kulissenbahn ist erreicht, sobald der Schubschlitten (50) seine hintere Position, vgl. Figur 1, wieder eingenommen hat. Der Zugdraht (91) hängt entspannt zwischen der Bohrung (52) und dem Haltebolzen (33). Der Kulissenzapfen (48) fällt wieder in den unteren Bereich des Kulissenkanals (42) zurück, womit auch die Schubnase (45) wieder hinter dem Mitnahmezapfen (24) positioniert ist. Die Antriebsvorrichtung (30) befindet sich wieder in ihrer Ausgangsposition.

Sobald sich auch die Schublade (21) wieder in der Schließstellung (5) befindet, kann die Betätigungsvorrichtung erneut ausgelöst werden.

In den Figuren 1 bis 3 sind als Variante zum einfachen Zugdraht (91), der auch ein Bündel von Zugdrähten sein kann, eine Zugdrahtkaskade (93) - gestrichelt gezeichnet - dargestellt. Hier wird ein auf der Platte (31) z.B. längsbeweglich geführter Umlenkschlitten (96) über zwei Zugdrähte (95) an der Platte (31) in Haltebolzen (35) angelenkt. Auf dem Umlenkschlitten (96) ist eine Umlenkrolle (97) gelagert, auf der ein am Schubschlitten (50) eingehängter Zugdraht (94) umgelenkt ist. Dieser Zugdraht (94) ist an einem Haltebolzen (34) befestigt. Hier werden alle Zugdrähte (94, 95) zum Öffnen der Schublade (21) bestromt. Mit Hilfe vergleichbarer Kaskaden kann der Schlittenweg und/oder die Zugkraft variiert werden.

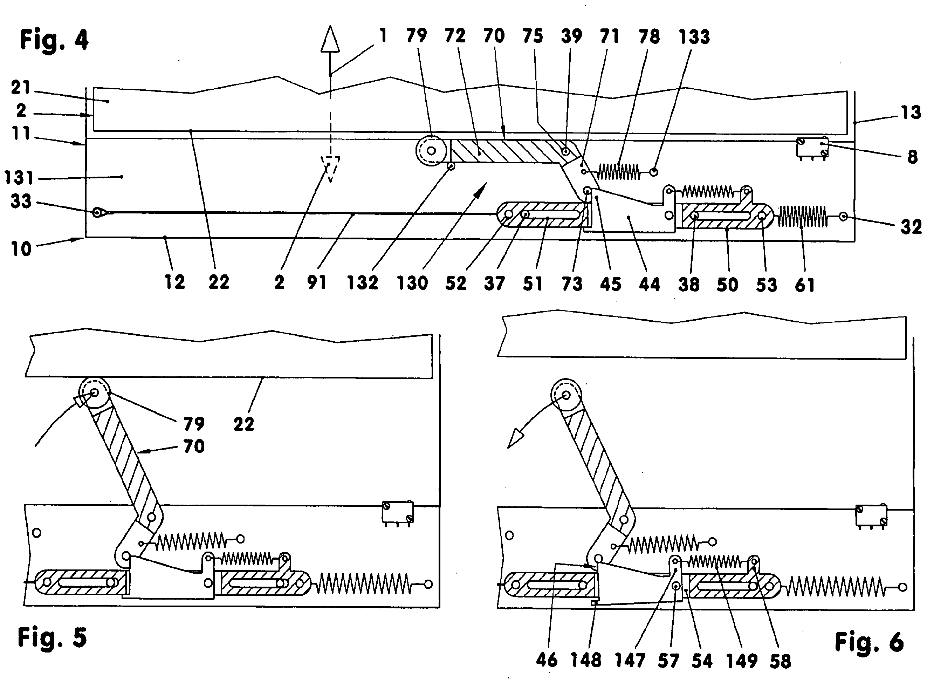

Die Figuren 4 bis 8 zeigen einen Korpus (11) und eine Schublade (21) in der Draufsicht. Nach Figur 4 befindet sich die Schublade (21) in der Schließstellung (5). Zwischen der Rückwand (22) der Schublade (21) und der Rückwand (12) des Korpus (11) ist eine Platte (131) angeordnet, auf der die Betätigungsvorrichtung mit ihrer Antriebsvorrichtung (130) aufgebaut ist.

Auch bei dieser Antriebsvorrichtung (130) wird ein Schubschlitten (50) mit einer Klinke (44) verwendet. Der Schubschlitten (50) weist zwei Länglöcher (51) auf, über die er auf den Führungsbolzen (37, 38) geführt ist. Vor dem Schubschlitten (50) ist der Zugdraht (91) angeordnet. Er ist am Schubschlitten (50) in der Bohrung (52) eingehängt und korpusseitig an einem Haltebolzen (33) fixiert.

Nach Figur 4 wird der Schubschlitten (50) in seiner hinteren Position über eine Zugfeder (61) mit niedriger Federrate, z.B. unter 1 N/mm, bewegt. Der Zugdraht (91) ist hierbei z.B. nicht straff gespannt.

Der Schubschlitten (50) lagert in einer Ausnehmung (54), vgl. Figur 6, als Schubelement die Klinke (44), die dort mittels des Klinkenschwenkbolzens (57) gelagert ist. Die Klinke (44) hat eine Schubnase (45), einen Schwenkhebel (147) und einen Anschlag (148). Am Schwenkhebel (147) der Klinke (44) ist eine Zugfeder (149) eingehängt, die zudem an einem Kragarm (58) des Schubschlittens (50) angelenkt ist. Die Zugfeder (149) hält die Klinke (44) in der Regel in einer Position, wie sie in Figur 4 und 5 dargestellt ist. Hierbei liegt der Anschlag (148) der Klinke (44) am Schubschlitten an.

In Öffnungsrichtung (1) liegt nach Figur 4 vor dem Schubschlitten (50) ein z.B. um 45 Winkelgrade gekröpfter Aufschiebehebel (70). Er besteht aus einem kurzen (71) und einem langen Hebelarm (72). Beide Hebelarme erstrecken sich beidseitig eines Schwenklagers (75). Der kurze Hebelarm (71) trägt an seinem freien Ende einen Mitnahmebolzen (73), während der lange Hebelarm (72) eine Hebelrolle (79) lagert. Der Aufschiebehebel (70) ist über sein Schwenklager (75) an einem an der Platte (31) befestigten Schwenkzapfen (39) gelagert. Am kurzen Hebelarm (71) ist eine Zugfeder (78) eingehängt, die an einem ortsfesten Haltebolzen (133) angelenkt ist. Die Zugfeder (78) zieht den Aufschiebehebel (70) gegen den ortsfesten Anschlagbolzen (132).

Beispielsweise rechts neben dem Aufschiebehebel (70) ist auf der Platte (131) ein Schalter (8) angeordnet. Der Schaltnocken des Schalters (8) ist der Rückseite (12) der Schublade zugewandt. Der Schaltnocken und die Hebelrolle (79) kontaktieren die Rückseite (12) nicht, solange die Schublade (21) in ihrer Schließstellung (2) ruht.

Zum Öffnen der Schublade (21) wird letztere wenige zehntel Millimeter gegen den Schalter (8) bewegt, so dass dieser über eine Schaltung den Zugdraht (91) mit Spannung beaufschlagt. Der Zugdraht (91) beginnt sich zu verkürzen. Der Schubschlitten (50) legt sich über die Vorderkante (46) des Schubelements (44) an den Mitnahmebolzen (73) an und schwenkt somit den Aufschiebehebel (70) gegen die Rückwand (12) der Schublade (21). Dort rollt nun die Hebelrolle (79) ab, vgl. Figur 5.

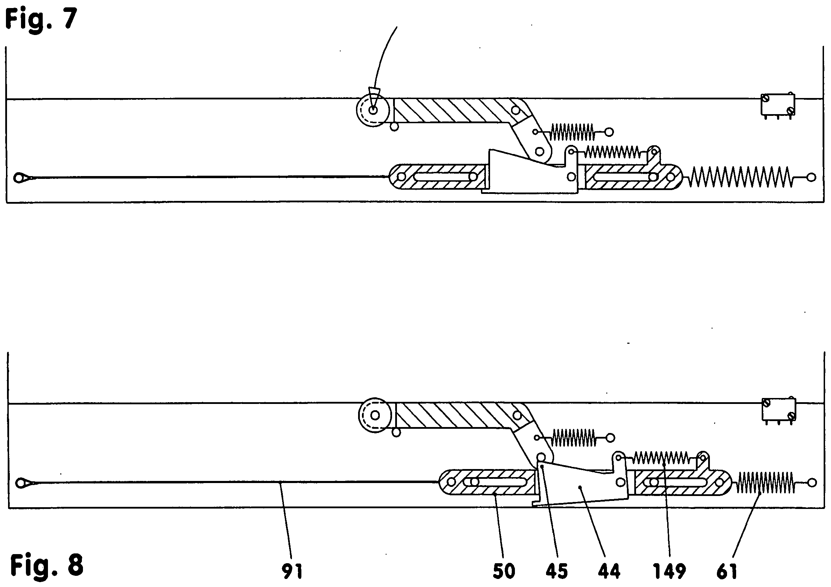

Sobald beim Schwenken des Aufschiebehebels (70) die obere Ecke der Vorderkante (46) unter die Mitte des Mitnahmebolzens (73) gelangt, weicht die Klinke (44) nach unten aus, vgl. Figur 6. Somit ermöglicht sie ein Zurückschwenken des Aufschiebehebels (70), vgl. Figur 7. Zwischenzeitlich öffnet sich die Schublade (21) aufgrund ihrer Massenträgheit weiter.

Während des den Zugdraht (91) längenden Abkühlvorganges zieht die Zugfeder (61) den Schubschlitten (50) nach rechts in seine ursprüngliche Ausgangslage, vgl. Figur 8. Hierbei gleitet die Klinke (44) nachgiebig unter dem Mitnahmebolzen (73) des Aufschiebehebels hindurch. Sobald die Schubnase (45) den Mitnahmebolzen (73) passiert hat, schwenkt die Klinke (44) unter der Wirkung der Zugfeder (149) im Uhrzeigerdrehsinn nach oben, bis der Anschlag (148) sich am Schubschlitten (50) anlegt. Dann befindet sich die Schubnase (45) wieder hinter dem Mitnahmebolzen (73). Nach einem Einschieben der Schublade (21) ist die Betätigungsvorrichtung wieder in ihrer Ausgangsposition.

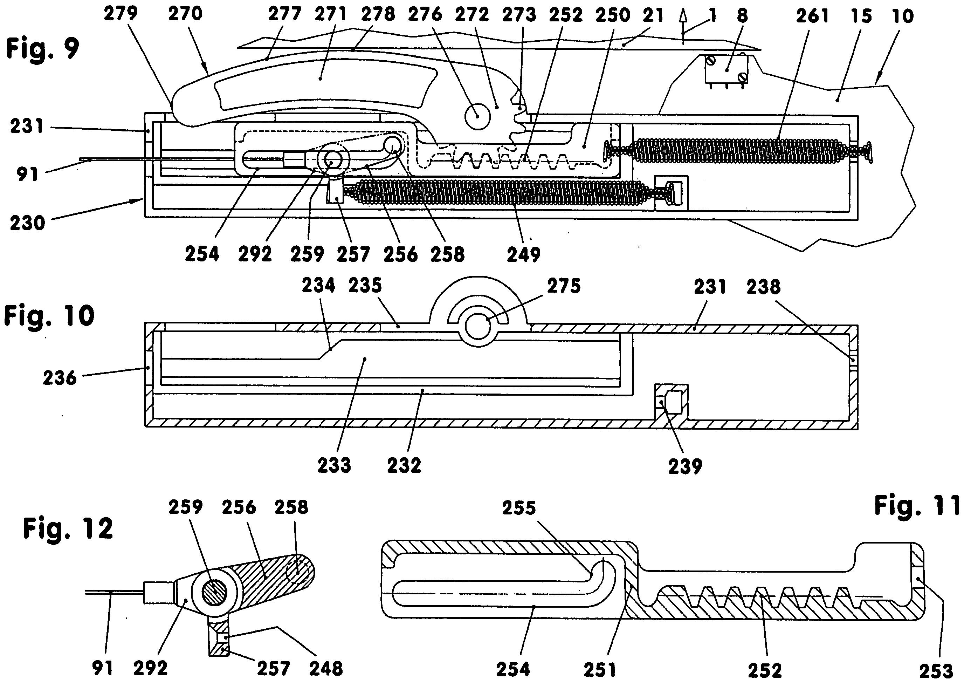

Die Figuren 9 bis 14 zeigen eine Betätigungsvorrichtung, bei der die Antriebsvorrichtung (230) einen Schubschlitten (250) mit z.B. integrierter Zahnstange (252) bewegt, die zum Öffnen einer in einem Korpus (10) gelagerten Schublade (21) einen zumindest teilverzahnten Aufschiebehebel (270) zwangsläufig über die Zahnstange (252) verschwenkt.

Dazu befindet sich im Korpus (10), im Bereich hinter der Schublade (21), ein Tragrahmen (15), auf dem ein z.B. quaderförmiges Gehäuse (231) angeordnet ist, vgl. Figur 10.

Im Gehäuse (231) ist der Schubschlitten (250) in einem rechteckigen Führungsrahmen (232) gleitgelagert. Im Boden des Führungsrahmens (232) ist eine sechseckige, plane Vertiefung (233) mit einer Anlaufschräge (234) angeordnet. Die Anlaufschräge (234) ist gegenüber der Verschieberichtung des Schubschlittens (250) um beispielsweise 45 Winkelgrade geneigt. Die Anlaufschräge (234) ist hier eine plane Flanke der Wandung der Vertiefung (233). Sie kann jedoch auch gekrümmt ausgeführt sein.

Das Gehäuse (231) hat im mittleren Bereich auf der Seite des Führungsrahmens (232) eine Lagerstelle (275) in Form einer Bohrung zur Aufnahme des Schwenkzapfens (276) des Aufschiebehebels (270). Im Bereich der Lagerstelle (275) hat das Gehäuse (231) einen Durchbruch (235) für den Aufschiebehebel (270). Im rechten Bereich weist das Gehäuse zwei Lagerstellen (238) und (239) für die Aufnahme von Zugfedern (261) und (249) auf, vgl. Figur 1. In der linken Stirnwand des Gehäuses (231) ist ein Durchbruch (236) zum Durchführen eines Zugdrahtes (91) angeordnet.

Das in den Figuren 9, 10, 13 und 14 offen dargestellte Gehäuse (231) ist - bei Betrieb - mit einem Deckel verschlossen, der - spiegelbildlich zum Gehäuseboden - ebenfalls einen Führungsrahmen (232) und eine Vertiefung (233) hat.

Der im Führungsrahmen (232) längsverschiebbar angeordnete Schubschlitten (250) ist in Figur 11 mittig längsgeschnitten dargestellt. Der Schubschlitten (250) besteht im Wesentlichen aus einer oberen und einer unteren Platte, die über einen s-förmigen Steg (251) miteinander verbunden sind. Der Steg teilt den Schubschlitten (250) in einen linken und einen rechten Abschnitt auf. Die Längsseite des rechten Abschnitts bildet eine Zahnstange (252). Die rechte Stirnseite dieses Abschnitts hat eine als Lagerstelle (253) ausgebildete Ausnehmung.

Im linken Abschnitt weist die obere und die untere Platte jeweils eine 1-förmige Langlochkulisse (254) auf, deren größerer, gerader Mittellinienabschnitt in der Verlängerung der Wälzgeraden der Zahnstange (252) liegt. Der kurze Bereich des Langlochs (254) ist mindestens so lang, dass seine linke Schubflanke (255) einen mehrere zehntel Millimeter langen geraden Abschnitt aufweist.

Figur 12 zeigt im Horizontalschnitt eine im Schubschlitten (250) in der Langlochkulisse (254) gelagerte und geführte Schiebeklinke (256) zusammen mit einer in ihr eingehängten Zuglasche (292). Die Schiebeklinke (256) weist einen seitlich unter z.B. 100 Winkelgraden abstehenden Klinkenhebelarm (257) auf, der an seinem freien Ende eine Lagerstelle (248) für eine Zugfeder (249) trägt. Im Bereich der Abknickstelle zwischen der Schiebeklinke (256) und dem Klinkenhebelarm (257) befindet sich ein von einem Führungszapfen (259) durchdrungener Schlitz, in den eine den Zugdraht (91) fixierende Zuglasche (292) eingelegt ist.

Die Zuglasche (292) stützt sich am Führungszapfen (259) ab. Der Führungszapfen (259) ragt oben und unten aus der Schiebeklinke (256) soweit heraus, dass er in den beiden Langlochkulissen (254) des Gehäuses (231) sicher geführt ist. Am vorderen Ende der Schiebeklinke (256) befindet sich ein zum Führungszapfen (259) paralleler Steuerzapfen (258), der sowohl die Langlochkulissen (254) durchdringt, als auch in die Vertiefungen (233) des Gehäuses (231) hineinragt.

Der Aufschiebehebel (270) hat eine im Wesentlichen scheibenförmige Nabe (272) und einen sichelförmig gekrümmten langen Arm (271). Die Nabe (272) hat eine dem Arm (271) abgewandt gelegene Teilverzahnung (273), deren z.B. sechs Zähne auf beispielsweise 180 Winkelgraden von der Nabe (272) abstehen. In der Nabenmitte befindet sich der Schwenkbolzen (276) des Aufschiebehebels (270). Der Arm (271) hat eine gegenüber der Rückwand (22) gekrümmte Kontaktfläche (277), wobei die Krümmung z.B. einem Zylindermantelabschnitt entspricht, vgl. Figur 9. Diese Kontaktfläche (277) kontaktiert - beim Aufschieben der Schublade (21) - zunächst die Schublade mit der ersten Kontaktlinie (278). Damit wirkt der Aufschiebehebel (270) auf die Schublade (21) beim Bewegungsstart mit einem z.B. bis auf die Hälfte verkürzten Hebelarm. Kurz bevor sich die ausfahrende Schublade (21) vom Aufschiebehebel (270) löst, berührt sie den Aufschiebehebel (270) mit der letzten Kontaktlinie (279). Der Aufschiebehebel (270) wirkt dann mit seinem maximalen Hebelarm.

Sollte die Kontaktfläche (277) quer zu der in Figur 9 gezeigten Krümmung eine Wölbung aufweisen - sollte die Kontaktfläche also ballig gekrümmt sein - werden aus den Kontaktlinien (278, 279) Kontaktpunkte.

Zum Aufschieben der Schublade (21) wird diese mit ihrer Rückwand (22) gegen den Schalter (8) bewegt. Letzterer bestromt den Zugdraht (91). Damit zieht dieser über die Zuglasche (292) an der Schiebeklinke (256), vgl. Figur 9. Die Schiebeklinke (256) befindet sich zu diesem Zeitpunkt in ihrer rechten Endlage in der Langlochkulisse (254) des rechts im Führungsrahmen (232) sitzenden Schubschlittens (250). Der Steuerzapfen (258) liegt an der Schubflanke (255) der Langlochkulisse (254) an. In dieser Position wird er durch die Wirkung der Zugfeder (249) gehalten.

Der sich verkürzende Zugdraht (91) zieht die Kombination aus Schiebeklinke (256) und Schubschlitten (250) nach links. Hierbei wälzt die Zahnstange (252) des Schubschlittens (250) an der Teilverzahnung (273) des im Gehäuse (231) in der Lagerstelle (275) schwenkbar gelagerten Aufschiebehebels (270) ab. Der Aufschiebehebel (270) schwenkt in Uhrzeigerdrehrichtung gegen die Rückwand (22) und beschleunigt damit die Schublade (21) in Öffnungsrichtung (1).

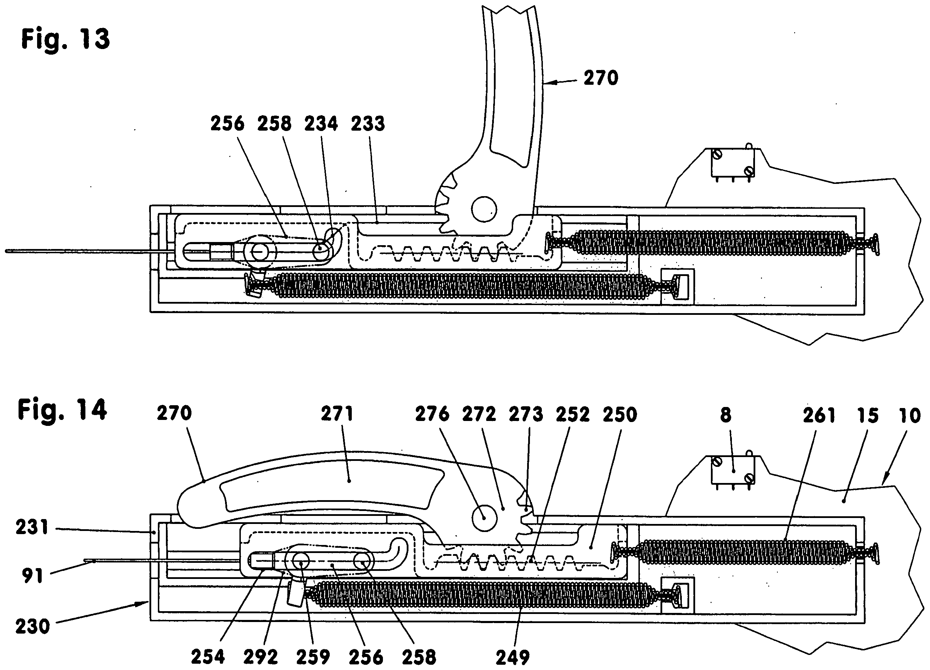

Kurz bevor der Aufschiebehebel (270) seine in Figur 13 dargestellte Endlage erreicht, stößt der Steuerzapfen (258) gegen die Anlaufschräge (234) der gehäuseseitigen Vertiefung (233). Dadurch wird der Steuerzapfen (258) von der Schubflanke (255) geschoben. Die Schiebeklinke (256) schwenkt um dem Führungszapfen im Uhrzeigersinn um z.B. 13,5 Winkelgrade. Der Steuerzapfen (258) gelangt somit in denjenigen Bereich der Langlochkulisse (254), der parallel zur Verschieberichtung des Schubschlittens (250) orientiert ist. Damit kuppelt der Steuerzapfen (258) den Schubschlitten (250) vom Zugdraht (91) ab.

In der Folge wird der Schubschlitten (250) durch die Zugwirkung der Zugfeder (261) nach rechts gezogen, womit der Aufschiebehebel (270) zurückschwenkt, vgl. Figur 14. Dabei wird die Schiebeklinke (256) nicht mitbewegt.

Während der anschließenden Längungsphase des Zugdrahtes (91) bewirkt die am Klinkenhebelarm (257) eingehängte Zugfeder (249) eine Verlagerung der Schiebeklinke (256) nach rechts. Sobald der Zugdraht (91) abgekühlt ist, gelangt der Steuerzapfen (258) wieder vor die Schubflanke (255), um den Schubschlitten (250) an den Zugdraht (91) anzukuppeln, vgl. Figur 9.

Mit einem Schließen der Schublade (21) befindet sich die Betätigungsvorrichtung wieder in ihrer Ausgangslage.

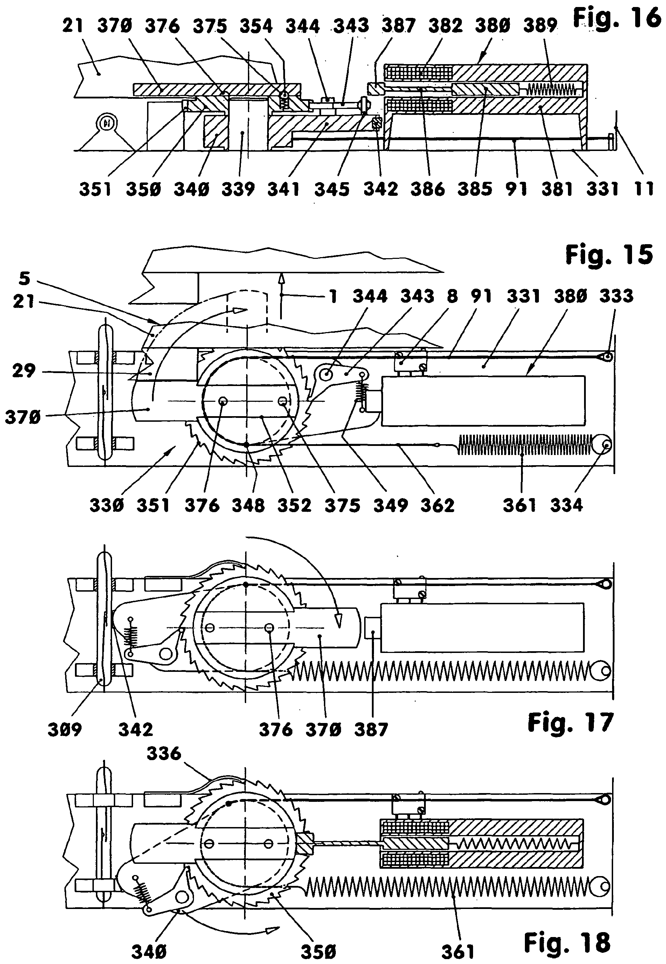

Die Figuren 15, 17 und 18 zeigen in der Ansicht von oben einen Teil einer Schublade (21) und eine hinter dieser angeordnete Betätigungsvorrichtung. Letztere hat eine Antriebsvorrichtung (330), die eine von einem Zugdraht (91) und einem federbelasteten Rückholdraht (362) zumindest teilumschlungene Seilrolle (340) aufweist. Die Seilrolle (340) trägt auf einer kreisrunden, richtverzahnten Rastscheibe (350) einen Aufschiebehebel (370), der in der Rastscheibe (350) fremdbetätigt längsverschiebbar gelagert ist.

Die Figuren 15 und 16 stellen die auf einem am Korpus (11) befestigten Gestell (331) befestigte Antriebsvorrichtung (330) in ihrer Ausgangslage dar. Die Schublade (21), die einen Auslösevorsprung (29) aufweist, befindet sich in ihrer Schließstellung (5).

Das zentrale Bauteil der Antriebsvorrichtung (330) ist die Seilrolle (340), die von einem Zugdraht (91) und einem Rückholdraht (362) wechselweise z.B. halbseitig umschlungen wird. Die Seilrolle (340) sitzt z.B. gleitgelagert auf einem Schwenkzapfen (339), der am Gestell (331) befestigt ist. An der Seilrolle (340) ist oberhalb des Zugdrahtes (91) eine Sperrerplatte (341) angeordnet. Die Sperrerplatte (341) steht einseitig über die Seilrolle (340) über. Sie trägt am größten Durchmesser ihrer radialen Kontur einen Permanetmagnet (342).

Auf der Sperrerplatte (341) ist ein abgewinkelter Sperrer (343) auf einem Schwenkbolzen (344) gelagert. Der Sperrer (343) greift als Teil eines Zahnrichtgesperres in die Richtverzahnung (351) der ebenfalls auf dem Schwenkzapfen (339) gelagerten Rastscheibe (350) ein. Er verhindert ein Drehen der Rastscheibe (350) entgegen dem Uhrzeigerdrehsinn. Dazu wird er mittels einer Zugfeder (349), die - eingehängt am Sperrer (343) - sich an einem an der Sperrerplatte (341) befestigten Bolzen (345) abstützt, im Richtverzahnungseingriff gehalten.

Die Rastscheibe (350) hat oberhalb ihrer Richtverzahnung (351) eine Schwalbenschwanzführung (352), in der der Aufschiebehebel (370) geführt ist. Letzterer ist nach den Figuren 15 und 16 in einer vorderen Position gehalten, bei der er zumindest nahezu parallel zur Anlagefläche des Auslösevorsprungs (29) der Schublade (21) anliegt. In dieser Position - gegenüber der Rastscheibe (350) - ist er mittels eines Rastgesperres gehalten. Dazu drückt eine in einer Sacklochbohrung der Rastscheibe (350) sitzende, federbelastete Rastkugel (354) in eine erste (375) von zwei Hebelausnehmungen (375, 376) des Aufschiebehebels (370).

Neben der Seilrolle (340) ist als Linearantrieb auf dem Gestell (331) ein Hubmagnet (380) angeordnet. Im Gehäuse des Hubmagnets (380) ist eine Spule (382) eingebaut, die bei einer Bestromung auf einen in der zentralen Bohrung des Hubmagnets () geführten Kern (385) wirkt. Der Kern (385) weist einen vorn aus dem Gehäuse herausragenden Stößel (386) auf, dessen vorderes Ende einen z.B. nichtmetallischen Stößelhammer (387) trägt. Eine in der zentralen Bohrung hinter dem Kern (385) positionierte Zugfeder (389) hält bei unbestromter Spule (382) den Kern (385) in einer hinteren Lage. Hierbei liegt der Stößelhammer (387) an der vorderen Gehäusestirnseite des Hubmagnets (380) an.

Um die Schublade (21) zu öffnen, wird diese kurzzeitig gegen den Schalter (8) bewegt. Dadurch wird über eine Schaltung der Zugdraht (91) bestromt. Der sich hierbei verkürzende Zugdraht (91), er ist am Gestell (331) in einem Haltebolzen (333) eingehängt und an der Seilrolle (340) an der Befestigungsstelle (348) fixiert, schwenkt die Seilrolle (340) zusammen mit der Rastscheibe (350) und dem Aufschiebehebel (370) im Ausführungsbeispiel um 180 Winkelgrade im Uhrzeigerdrehsinn. In dieser Drehrichtung ist die Seilrolle (340) über den Sperrer (343) mit der Rastscheibe (350) gekoppelt. Bei der Schwenkbewegung der Seilrolle (340) wird auf dieser der Rückholdraht (362) um 180 Winkelgrade aufgewickelt. Das vordere Ende des Rückholdrahts (362) ist ebenfalls an der Befestigungsstelle (348) fixiert. An seinem hinteren Ende ist eine Schraubenzugfeder (361) eingehängt, die sich wiederum an einem Haltebolzen (334) des Gestells (331) abstützt. Während der erwärmungsbedingten Zugphase des Zugdrahtes (91) wird die Rückholfeder (361) gespannt, vgl. Figur 17.

Anstelle der Schraubenzugfeder kann auch eine Drehfeder, z.B. eine auf dem Schwenkzapfen (339) gelagerte - am Gestell (331) abgestützte - Schenkelfeder, verwendet werden.

Durch die Schwenkbewegung der Rastscheibe (350) wird der Aufschiebehebel (370) gegen den an der Schubladenrückseite sitzenden Auslösevorsprung (29) gedrückt. Der Aufschiebehebel (370) gleitet mit seinem freien Ende an der Schubladenrückwand (22) auf ca. 75 Winkelgraden seines Schwenkweges entlang, um die Schublade (21) in Öffnungsrichtung (1) zu beschleunigen. Dann löst sich der Aufschiebehebel (370) von der Schublade (21). Ggf. trägt der Aufschiebehebel (370) an seinem freien Ende eine Hebelrolle, vgl. Hebelrolle (79) aus Figur 4.

Sobald der Zugdraht (91) seine kurze Länge eingenommen hat, ist der Aufschiebehebel (370) um 180 Winkelgrade geschwenkt worden, vgl. Figur 17. Das freie Ende des Aufschiebehebels (370) steht in kurzem Abstand vor dem Stößelhammer (387) des Hubmagneten (380). Gleichzeitig wurde der Permanentmagnet (342) der Sperrerplatte (341) vor einen auf dem Gestell (331) befestigten Reedschalter (309) geschwenkt. Der Reedschalter (309) betätigt über eine Schaltung den Hubmagnet (380) kurzzeitig. Letzterer schiebt den Aufschiebehebel (370) in seine zweite Endposition, vgl. Figur 18, um sich dann wieder in seine Ausgangslage zu bewegen. In dieser Endposition verrastet die Rastkugel (354), vgl. Figur 16, in der zweiten Hebelausnehmung (376) und sichert so den Aufschiebehebel (370) an der Rastscheibe (350).

Zwischenzeitlich längt sich der Zugdraht (91) durch das Abkühlen. Hierbei schwenkt die Seilrolle (340) unter dem Zug der Schraubenzugfeder (361) in Gegenuhrzeigerrichtung wieder in ihre Ausgangslage zurück, vgl. Figur 18. Die Rastscheibe (350) ändert jedoch ihre Position nicht, da sie durch einen zweiten Sperrer (336), z.B. einen auf dem Gestell (331) befestigten Blattfedersperrer, an einem Zurückdrehen gehindert wird.

Sobald die Seilrolle (340) und die Schublade (21) wieder ihre Ausgangspositionen eingenommen haben, ist diese Betätigungsvorrichtung wieder in der Startposition für eine erneute Öffnungsbewegung.

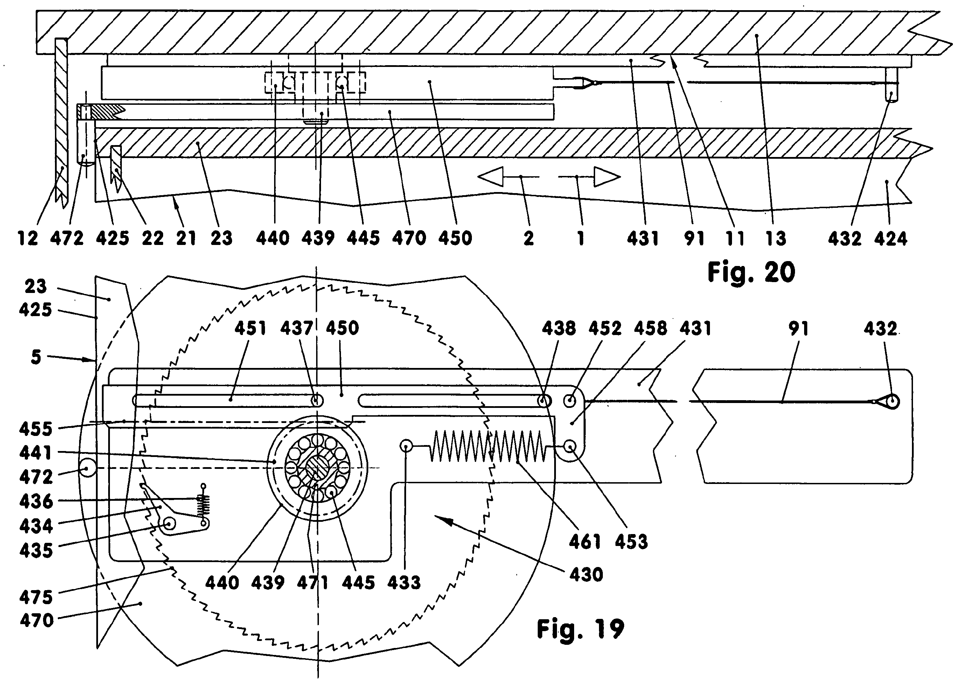

Die Figuren 19 bis 23 zeigen eine Betätigungsvorrichtung, deren Antriebsvorrichtung (430) die Schublade (21) über eine unter dieser angeordneten Umlaufscheibe (470) antreibt.

Die Antriebsvorrichtung ist auf einer Platte (431) aufgebaut, die am Korpus (11) an dessen Seitenwand (13) in der Nähe der Rückwand (12) angeordnet ist, vgl. Figur 20. Sie liegt z.B. oberhalb der die Schublade (21) tragenden Führungsschiene. Ggf. ist die Antriebsvorrichtung (430) in die Führungsschiene integriert. Auf der Platte (431) ist auf den Führungsbolzen (437) und (438) ein Schubschlitten (450) mittels seiner Langlöcher (451) geführt. Der Schubschlitten (450) hat einen Kragarm (458), an dessen freien Ende eine Rückholfeder (461) eingehängt ist. Das andere Ende dieser Zugfeder ist an einem plattenseitigen Haltebolzen (433) angelenkt. Die Rückholfeder (461) wirkt einem Zugdraht (91) entgegen. Letzterer ist am Schubschlitten (450) in einer Bohrung (452) eingehängt und plattenseitig an einem Halteholzen (432) fixiert. In der in Figur 19 dargestellten Position ist der unbestromte Zugdraht nicht zwingend gespannt, da der Schubschlitten (450) unter der Wirkung der Rückholfeder (461) am rechten Ende des linken Langloches (451) anliegt.

In den Schubschlitten (450) ist eine Zahnstange integriert, deren Verzahnung (455) mit der Verzahnung (441) eines Zahnrades (440) kämmt. Das Zahnrad (440) hat eine zentrale Bohrung, in der ein Freilauf (445) angeordnet ist. Die Nabe des Freilaufes (445) ist zugleich die Nabe (471) einer Umlaufscheibe (470). Die Umlaufscheibe (470) ist auf einer auf der Platte (431) befestigten Schwenkachse (439) gelagert.

Die Umlaufscheibe (470) trägt im Randbereich einen Aufschiebezapfen (472), der nach den Figuren 19, 20, 22 und 23 an der hinteren Kante (425) der Schubladenseitenwand (23) anliegt. Ggf. kann die Umlaufscheibe (470) auch ein Hebel sein, an dessen freien Ende der Aufschiebezapfen (472) angeordnet ist.

Auf der der Seitenwand (23) abgewandten Seite trägt die Umlaufscheibe (470) eine Richtverzahnung (475), an der ein auf einem Sperrerlager (435) gelagerter winkelförmiger Sperrer (434) federbelastet anliegt. Die Richtverzahnung (475) sperrt in der Gegenuhrzeigerdrehrichtung.

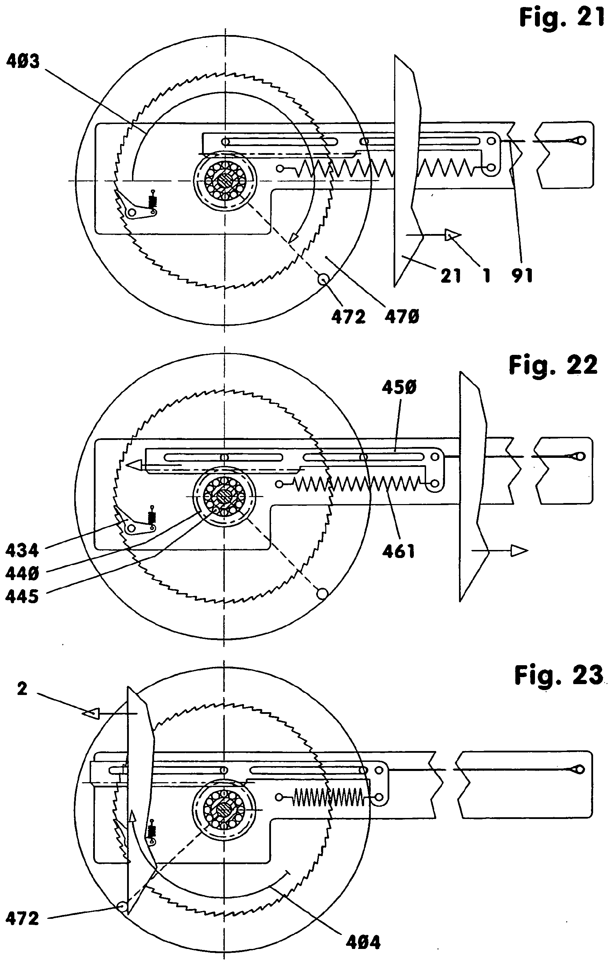

Um die Schublade (21) zu öffnen, also in die Öffnungsrichtung (1) zu bewegen, wird der Zugdraht (91), z.B. durch eine Funkfernbedienung, einen Funkempfänger und eine nachgeordnete Schaltung kurzzeitig bestromt. Der Zugdraht (91) verkürzt sich und zieht somit den Schubschlitten (450) gegen die Wirkung der Rückholfeder (461) nach rechts. Dabei dreht sich das Zahnrad (440) im Uhrzeigerdrehsinn. In dieser Drehrichtung sperrt der Freilauf (445) und dreht so zwangsläufig die Scheibennabe (471) und die Umlaufscheibe (470) synchron mit. In der Folge gleitet der Aufschiebezapfen (472) an der Schubladenkante (425) entlang, wodurch sich diese - bei einem minimalen Hebelarm beginnend - in Bewegung setzt, vgl. Pfeil (403) aus Figur 21.

Ist der Verkürzungshub des Zugdrahtes (91) erschöpft, vgl. Figur 21, hat die Umlaufscheibe (470) einen Schwenkwinkel von ca. 225 Winkelgraden erreicht. Auf bis zu 180 Winkelgraden ihres Schwenkbereichs hat der Aufschiebezapfen (472) die Schubladenkante (425) kontaktiert.

Während sich die Schublade (21) aufgrund ihrer Massenträgheit weiter öffnet, verlängert sich der abkühlende Zugdraht (91) wieder. Die Rückholfeder (461) bewegt den Schubschlitten (450) nach links in seine Ausgangslage, vgl. Figur 22. Das sich zwangsläufig zurückdrehende Zahnrad (440) kann dabei die Umlaufscheibe (470) nicht antreiben, da im Gegenuhrzeigerdrehsinn der Freilauf (445) geöffnet ist und zudem der Sperrer (434) eine Drehbewegung der Umlaufscheibe (470) im Gegenuhrzeigerdrehsinn sperrt.

Die Umlaufscheibe (470) gelangt erst wieder in ihre in Figur 19 dargestellte Ausgangslage, wenn die Schublade (21) geschlossen wird, vgl. Figur 23. Die zurückfahrende Schublade (21) schiebt mit ihrer Kante (425) den Aufschiebezapfen (472) vor sich her. Dabei schwenkt die Umlaufscheibe (470) im Uhrzeigerdrehsinn. Der Sperrer (434) hat hier keine Wirkung.

Sobald die Schublade (21) und der Schubschlitten (450) ihre bzw. seine Schließstellung (5) erreicht haben, kann der Öffnungszyklus von Neuem beginnen.

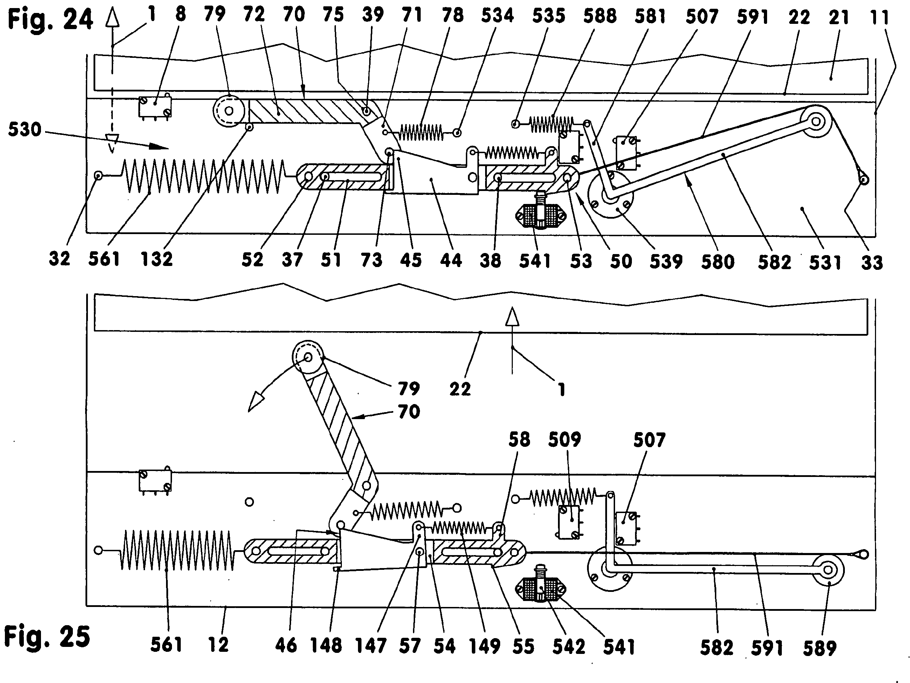

In den Figuren 24 und 25 wird eine Variante gezeigt, bei der die Schublade (21) über einen Aufschiebehebel (70) mittels eines gespannten Federelementes (561) geöffnet wird. Der Aufschiebehebel (70) wird von einem Schubschlitten (50) angetrieben, auf den das Federelement (561) wirkt. Zur Spannung des - nach dem Öffnen der Schublade (21) - entspannten Federelements (561) wird ein aus einem Formgedächtnismaterial gefertigter Zugdraht (591) verwendet.

Das Federelement (561) ist im Ausführungsbeispiel eine Schraubenzugfeder, es kann jedoch auch eine Druckfeder, eine Blattfeder, eine Torsionsfeder, eine Elastomerfeder, eine Gasfeder oder dergleichen sein. Auch eine Kombination aus mehreren gleichen oder verschiedenen Federn oder Federarten ist denkbar. Ggf. kann das Federelement auch durch ein auf den Schubschlitten (50) wirkendes Schwerkraftgewicht wirken.

In Figur 24 befinden sich alle beweglichen Bauteile in ihrer Ausgangsstellung. Die Schublade (21) steht mit ihrer Rückwand (22) direkt vor dem Aufschiebehebel (70) und der Federspeicher (561), also hier die Zugfeder (561), ist gespannt. Der Zugdraht (591) hat seine längste Länge eingenommen.

Die Antriebsvorrichtung (530) ist auf einer Platte (531) aufgebaut. Der Schiebeschlitten (50) ist über seine Langlöcher (51) auf den Führungsbolzen (37, 38) gelagert. Letztere sind auf der Platte (531) befestigt. Der Schiebeschlitten (50) trägt in einer Ausnehmung (54) eine Klinke (44), die um einen Klinkenschwenkbolzen (57) schwenkbar gelagert ist. Die Klinke (44) hat einen Schwenkhebel (147), an dessen freien Ende eine Zugfeder (149) eingehängt ist. Die Zugfeder (149) stützt sich an einem Kragarm (58) des Schubschlittens (50) ab.

Zwischen dem Schubschlitten (50) und der Schubladenrückwand (22) ist der Aufschiebehebel (70) auf dem Schwenkbolzen (39) gelagert. Der Aufschiebehebel (70) trägt an einem langen Hebelarm (72) eine Hebelrolle (79) und an einem kurzen Hebelarm (71) einen Mitnahmebolzen (73). Letzterer liegt nach Figur 24 an der Schubnase (45) der Klinke (44) an.

Der Schubschlitten (50) hat z.B. im hinteren Bereich eine Rastnase (55), deren rückseitige Flanke ca. 10 Winkelgrade gegen die Verfahrrichtung des Schubschlittens (50) geneigt ist. Die Rastnase (55) ist zur Rückwand (12) des Korpus (11) hin orientiert. Nach Figur 24 ist zwischen dem Schubschlitten (50) und der Rückwand (12) ein elektrisch betätigbarer Hubmagnet (541) angeordnet. Letzterer hat einen Rastbolzen (542), der bei unbestromtem Hubmagnet (541) in Richtung Schubschlitten (50) federbelastet ausgefahren ist. Der Rastbolzen(542) hält nach Figur 24 den Schubschlitten (50) an dessen Rastnase (55) in der hinteren Position.

Vor dem Schubschlitten (50) befindet sich die Schraubenzugfeder (561), die an einem an der Platte (531) befestigten Haltebolzen (32) fixiert ist. Am Schubschlitten (50) ist sie in der vorderen Bohrung (52) eingehängt. Der Schubschlitten (50) liegt mit der Rastnase (55) am Rastbolzen (542) an.

In der hinteren Bohrung (53) ist der Zugdraht (591) eingehängt. Mit seinem anderen Ende ist er über eine Öse am Haltebolzen (33) der Platte (531) befestigt. Auf den Zugdraht (591) wirkt ein Spannhebel (580). Dieser Spannhebel (580) ist in einem Schwenklager (539) auf der Platte (531) gelagert. Er hat einen langen Spannarm (581), der an seinem freien Ende eine - am Zugdraht (591) anliegende - Spannhebelrolle (589) lagert. Er hat ferner einen kürzeren Schaltarm (581), der am Spannarm (582) z.B. um 90 Winkelgrade abgewinkelt angeordnet ist. Am freien Ende des Spannarms (581) ist eine Zugfeder (588) eingehängt, die sich an einem Haltebolzen (535) der Platte (535) abstützt. Über die Zugfeder (588) wird der Zugdraht (591) immer unter einer - wenn auch geringen - Zugspannung gehalten.

Auf der Platte (531) ist an einem Ende des Schwenkbereichs des Spannarms (581) ein Schalter (507) für das Einleiten der Zugdrahtbestromung angeordnet. Links neben ihm befindet sich ein weiterer Schalter (509), der das Abschalten der Zugdrahtbestromung bewirkt. Letzterer liegt mit seinem Kontakt hinter dem Kragarm (58) des Schubschlittens (50).

Soll nun die Schublade (21) geöffnet werden, wird durch den Kontakt der Schubladenrückwand (22) mit dem Schalter (8), z.B. über eine Schaltung, der Hubmagnet (541) betätigt. Dabei rutscht der Rastbolzen (542) von der Rastnase (55) des Schubschlittens (50), vgl. Figur 25. Der somit freigegebene Schubschlitten (50) bewegt sich unter der Wirkung der Schraubenzugfeder (561) nach links und schwenkt den Aufschiebehebel (70) im Uhrzeigerdrehsinn gegen die Schubladenrückwand (22), vgl. auch Figur 5.

Durch die Verlagerung des Schubschlittens (50) wird der unbestromte und kalte Zugdraht (591) gespannt, wobei er über die Spannhebelrolle (589) den Spannhebel (580) im Uhrzeigerdrehsinn verschwenkt. Ist der Zugdraht (591) vollständig gespannt, kontaktiert der Schaltarm (581) den Schalter (507). Letzterer bestromt ggf. über eine Schaltung den Zugdraht (591). Der Zugdraht (591) verkürzt sich unter Zugkraftentwicklung, um die Schraubenzugfeder (561) zu spannen. Der Spannvorgang ist beendet, sobald der Rastbolzen (542) wieder vor der Rastnase (55) eingerastet ist, vgl. Figur 24, und der Kragarm (58) den Schalter (509) betätigt hat. Der Schalter (509) schaltet die Zugdrahtbestromung ab, womit sich der Zugdraht (591) wieder längt und der Spannhebel (580) in die in Figur 24 dargestellte Position schwenkt.

Nach einem Schließen der Schublade (21) kann der Schubladenöffnungsvorgang erneut eingeleitet werden.

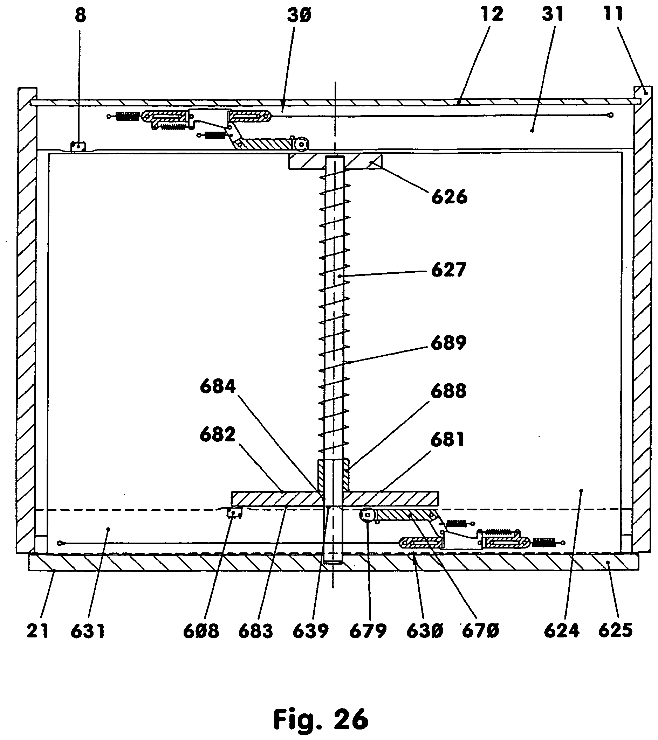

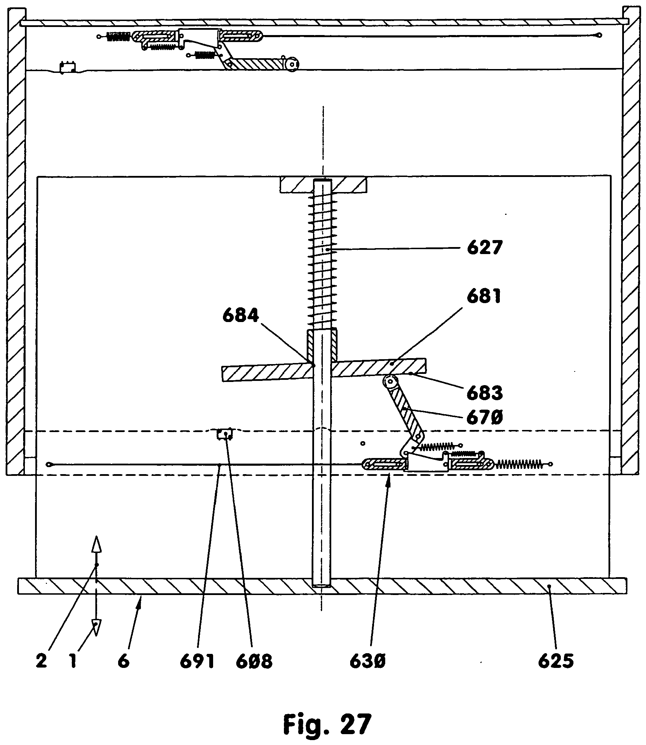

Die Figuren 26 und 27 zeigen jeweils eine in einem Korpus (11) geführte Schublade (21) von unten. Die Schublade (21) wird mit einer Antriebsvorrichtung (30) geöffnet und mit einer zweiten Antriebsvorrichtung (630) geschlossen.

Die erste Antriebsvorrichtung (30) befindet sich im Bereich hinter der Schublade (21). Vor der Rückwand (12) des Korpus ist dazu eine Platte (31) oder ein Gestell montiert, das z.B. an seiner Unterseite die schon aus den Figuren 4 bis 8 bekannte Antriebsvorrichtung (30) hängend trägt.

Die zweite Antriebsvorrichtung (630), die z.B. einen zumindest nahezu baugleichen Aufbau gegenüber der Antriebsvorrichtung (30) aufweist, ist unterhalb der Schublade (21) z.B. auf einer flachen Quertraverse (631) befestigt, so dass die Antriebsteile geschützt zwischen der Quertraverse (631) und dem Schubladenboden (624) angeordnet sind.

Für diese Antriebsvorrichtung (630) ist an der Unterseite des Schubladenbodens (624) eine Positionierstange (627) angeordnet. Sie ist eine glatte, zylindrische Stange, die vorn in einer Sacklochbohrung der Frontplatte (625) und hinten in einer Sacklochbohrung einer Stütze (626) sitzt. Die Positionierstange (627) ist parallel zur Öffnungsrichtung (1) der Schublade (21) orientiert. In Längsrichtung ist sie in den Sacklochbohrungen spielfrei eingespannt.

Auf der Positionierstange (627) ist eine Klemmwippe (681) gelagert. Die Klemmwippe (681) ist z.B. ein aus einer Aluminiumlegierung gefertigter Balken mit einem Rechteckquerschnitt. Genau mittig hat sie eine Bohrung (684), deren Innendurchmesser z.B. 0,3 bis 0,6 mm größer ist als der Außendurchmesser der Positionierstange (627). Die Oberseite der Klemmwippe (681) liegt zumindest punktuell oder mit viel Spiel an der Unterseite des glatten, formsteifen Schubladenbodens (624) verdrehsicher an.

Zwischen der Stütze (626) und der Klemmwippe (681) ist eine Nachführfeder (689) und eine Schiebehülse (688) angeordnet. Die Schiebehülse (688) liegt vorn direkt an der Rückseite (682) der Klemmwippe (681) an. Hinter ihr sitzt die Nachführfeder (689), die sich an der Stütze (626) abstützt. Nach Figur 26 liegt bei nicht geöffneter Schublade (21) die Klemmwippe (681) vorn an einem z.B. sphärisch gekrümmten Anschlagelement (639) an. Die Klemmwippe (681) ist dabei zumindest annähernd parallel zur Frontplatte (625) ausgerichtet.

Ist nun die Schublade (21) um einen bestimmten Weg teilweise oder ganz geöffnet worden, hat das Anschlagelement (639) der Quertraverse (631) die Klemmwippe (681) relativ zur Schublade (21) um den Öffnungsweg verschoben. Die Klemmwippe (681) ist weiterhin parallel zur Frontplatte (625) ausgerichtet.

Soll die Schublade (21) wieder geschlossen werden, wird ein am Korpus (11) oder an der Schublade (21) angeordneter Schalter betätigt. Letzterer bestromt den Zugdraht (691) der vorderen Antriebsvorrichtung (630), so dass deren Aufschiebehebel (670) sich an der Klemmwippe (681) - an deren Vorderseite (683) - anlegt. Durch dieses Anlegen wird die Klemmwippe (681) um einige Winkelgrade in ihrer Bohrung (684) gekippt, so dass sie sich an der Positionierstange (627) verklemmt. Folglich wird die Schwenkbewegung des Aufschiebehebels (670), vgl. auch Figuren 4 bis 8 und deren Beschreibung, über die Positionierstange (627) auf die Schublade (21) übertragen. Letztere bewegt sich in Schließrichtung (2). Die Schließbewegung wird zusätzlich von der geringen Federwirkung der Nachführfeder (689) unterstützt.

Sobald der Aufschiebehebel (670) wieder in seine Ausgangslage, vgl. Figur 26, zurückgekehrt ist, richtet sich die Klemmwippe (681) wieder parallel zur Frontplatte (625) aus und gleitet gegen das Anschlagelement (639) der Quertraverse (631).

Alternativ kann die offene Schublade (21) auch durch ein kurzes Aufziehen zum Schließen veranlasst-werden. Dazu ist vor dem linken Ende der Klemmwippe (681) die Schaltnocke eines an der Quertraverse (631) befestigten elektrischen Schalters (608) positioniert, ohne diesen zu betätigen. Durch den kurzen Öffnungsruck schlägt die sich an der Hebelrolle (679) abstützende Klemmwippe (681) gegen den Schalter (608). Letzterer betätigt über eine Schaltung den Zugdraht (691), um die Schließbewegung durch eine Zugdrahtbestromung einzuleiten.

In der Offenstellung hat hier die Schublade (21) gegenüber dem Korpus z.B. einen elastischen - nicht dargestellten -Anschlag, der es ermöglicht, dass die Schublade (21) auch in ihrer vorderen Offenstellung zur Betätigung des Schalters (608) noch einige zehntel Millimeter herausgezogen werden kann.

Zum Öffnen der Schublade (21) kann der durch eine Schließbewegung betätigte Schalter (8) auch durch ein Betätigungselement ersetzt werden, das irgendwo am Korpus (11), der Schublade (21) oder an einer anderen geeigneten Stelle angeordnet ist. Auch ein drahtloses Betätigungselement ist denkbar.

### Bezugszeichenliste:

- 1: Öffnungsrichtung
- 2: Schließrichtung
- 5: Schließstellung der Schublade
- 6: Offenstellung der Schublade
- 8: Schalter, elektrisch
- 10: Unterschrank
- 11: Korpus, Unterschrankkorpus
- 12: Rückwand, Korpusrückwand
- 13: Seitenwand
- 15: Tragrahmen
- 21: Schublade
- 22: Rückwand, Schubladenrückwand
- 23: Seitenwand
- 24: Mitnahmezapfen, Kupplungselement
- 25: Tragrolle
- 26: Führungsschiene
- 27: Senke
- 28: Überhöhung
- 29: Auslösevorsprung
- 30: Antriebsvorrichtung
- 31: Platte, Gestell, Gehäuse
- 32: Haltebolzen, Anlenkstellen für Feder
- 33: Haltebolzen, Anlenkstellen für Zugdraht (91)
- 34: Haltebolzen, Anlenkstellen für Zugdraht (94)
- 35: Haltebolzen, Anlenkstellen für Zugdrähte (95)
- 37, 38: Führungsbolzen
- 39: Schwenkzapfen
- 41: Klinkenkulisse
- 42: Kulissenkanal
- 43: Magnet, Permantmagnet
- 44: Klinke, Schubelement
- 45: Schubnase
- 46: Vorderkante
- 47: Kragarm
- 48: Kulissenzapfen
- 49: Entsperrplatte
- 50: Schubschlitten
- 51: Langlöcher
- 52, 53: Bohrungen, vorn, hinten
- 54: Ausnehmung
- 55: Rastnase
- 57: Klinkenschwenkbolzen
- 58: Kragarm
- 61: Schraubenzugfeder
- 70: Aufschiebehebel, Kupplungselement
- 71: Hebelarm, kurz
- 72: Hebelarm, lang
- 73: Mitnahmebolzen
- 75: Schwenklager
- 78: Zugfeder
- 79: Hebelrolle
- 91: Zugdraht, Formgedächtniselement
- 93: Zugdrahtkaskade
- 94: Zugdraht, umgelenkt; Formgedächtniselement
- 95: Zugdrähte, doppelt; Formgedächtniselemente
- 96: Umlenkschlitten
- 97: Umlenkrolle

- 130: Antriebsvorrichtung
- 131: Platte, Gestell, Gehäuse
- 132: Anschlagbolzen
- 133: Haltebolzen
- 147: Schwenkhebel
- 148: Anschlag
- 149: Zugfeder
- 230: Antriebsvorrichtung
- 231: Gehäuse mit Deckel
- 232: Führungsrahmen
- 233: Vertiefung
- 234: Anlaufschräge
- 235: Durchbruch für (271)
- 236: Durchbruch für (91)
- 238: Lagerstelle für (249)
- 239: Lagerstelle für (261)
- 248: Lagerstelle an (257)
- 249: Zugfeder
- 250: Schubschlitten
- 251: Steg, s-förmig
- 252: Zahnstange
- 253: Lagerstelle
- 254: Langlochkulisse
- 255: Schubflanke von (254)
- 256: Schiebeklinke
- 257: Klinkenhebelarm
- 258: Steuerzapfen
- 259: Führungszapfen
- 261: Schraubenzugfeder
- 270: Aufschiebehebel, Kupplungselement
- 271: Arm, gekrümmt
- 272: Nabe
- 273: Teilverzahnung
- 275: Schwenklager
- 276: Schwenkbolzen
- 277: Kontaktfläche
- 278: erste Kontaktlinie
- 279: letzte Kontaktlinie
- 292: Zuglasche

- 309: Reedschalter, elektrisch
- 330: Antriebsvorrichtung
- 331: Gestell
- 333: Haltebolzen für (91)
- 334: Haltebolzen für (361)
- 336: Sperrer, Blattfedersperrer
- 339: Schwenkzapfen
- 340: Seilrolle
- 341: Sperrerplatte
- 342: Permanentmagnet
- 343: Sperrer
- 344: Schwenkbolzen
- 345: Bolzen
- 348: Befestigungsstelle für (91) und (362)
- 349: Zugfeder
- 350: Rastscheibe
- 351: Richtverzahnung
- 352: Schwalbenschwanzführung
- 354: Rastkugel, federbelastet
- 361: Schraubenzugfeder
- 362: Rückholdraht
- 370: Aufschiebehebel, Kupplungselement
- 375: erste Hebelausnehmung
- 376: zweite Hebelausnehmung
- 380: Hubmagnet
- 381: Magnetgehäuse
- 382: Spule
- 385: Kern
- 386: Stößel
- 387: Stößelhammer
- 389: Zugfeder

- 403: Pfeil für Öffnungsschwenkbewegung
- 404: Pfeil für Rücklauf schwenkbewegung
- 424: Schubladenboden
- 425: Hinterkante von (23)
- 430: Antriebsvorrichtung
- 431: Platte
- 432: Haltebolzen für (91)
- 433: Haltebolzen für (461)
- 434: Sperrer
- 435: Sperrerlager
- 436: Sperrerfeder
- 437, 438: Führungsbolzen
- 439: Schwenkachse
- 440: Zahnrad
- 441: Außenverzahnung
- 445: Freilauf
- 450: Schubschlitten
- 451: Langlöcher
- 452: Bohrung für(91)
- 453: Bohrung für (461)
- 455: Verzahnung
- 458: Kragarm
- 461: Rückholfeder, Zugfeder
- 470: Umlaufscheibe, Kupplungselement
- 471: Scheibennabe, Nabe
- 472: Aufschiebezapfen, Kupplungselement
- 475: Richtverzahnung

- 507: Schalter, elektrisch
- 509: Schalter, elektrisch
- 530: Antriebsvorrichtung
- 531: Platte, Gestell, Gehäuse
- 534: Haltebolzen für (78)
- 535: Haltebolzen für (588)
- 539: Schwenklager
- 541: Hubmagnet
- 542: Rastbolzen
- 561: Federspeicher, Schraubenzugfeder, Antriebszugfeder
- 580: Spannhebel
- 581: Schaltarm, kurz
- 582: Spannarm, lang
- 584: Schwenklager
- 588: Zugfeder
- 589: Spannhebelrolle
- 591: Zugdraht, Formgedächtniselement

- 608: Schalter, elektrisch
- 624: Schubladenboden
- 625: Frontplatte
- 626: Stütze
- 627: Positionierstange
- 630: Antriebsvorrichtung
- 631: Platte, Quertraverse, Gestell
- 639: Anschlagelement
- 670: Aufschiebehebel, Kupplungselement
- 679: Hebelrolle
- 681: Klemmwippe
- 682: Rückseite
- 683: Vorderseite
- 684: Bohrung
- 688: Schiebehülse
- 689: Nachführfeder
- 691: Zugdraht, Formgedächtniselement

## Patentansprüche

1. Betätigungsvorrichtung, die ein bewegliches Möbelstückteil (21) gegenüber einem ortsfesten Möbelstückteil (11) mittels einer mindestens ein Formgedächtniselement (91, 94, 95, 691) aufweisenden Antriebsvorrichtung (30, 130, 230, 330, 430, 530, 630) in eine Öffnungs- oder eine Schließrichtung in Bewegung versetzt, **dadurch gekennzeichnet,**
- **dass** entweder die Antriebsvorrichtung (30, 130, 230, 330, 430, 530, 630) am ortsfesten Möbelstückteil (11) fixiert ist und am beweglichen Möbelstückteil (21, 22, 24, 425, 681, 683) über ein antriebsseitiges Kupplungselement (44, 70, 270, 370, 472, 670) zeitweise anliegt
- oder dass die Antriebsvorrichtung (30, 130, 230, 330, 430, 530, 630) am bewegliche Möbelstückteil (21) fixiert ist und am ortsfesten Möbelstückteil (11) über ein antriebsseitiges Kupplungselement zeitweise anliegt,
- **dass** die Antriebsvorrichtung (30, 130, 230, 330, 430, 530, 630) als ein das Möbelstückteil (21) bewegendes Antriebselement entweder ein sich bei Erwärmung verkürzendes Formgedächtniselement (91, 94, 95, 691) oder einen Federspeicher (561) aufweist, wobei der Federspeicher durch mindestens ein sich bei Erwärmung verkürzendes Formgedächtniselement (591) gespannt wird und
- **dass** das Formgedächtniselement (91, 94, 95, 591, 691) aus einem Zugdraht oder einem Bündel von Zugdrähten besteht.

2. Betätigungsvorrichtung gemäß Anspruch 1, **dadurch gekennzeichnet, dass** sich das Formgedächtniselement (91, 94, 95, 691) zur Antriebskrafterzeugung bei Erwärmung verkürzt und reversibel bei Abkühlung wieder verlängert.

3. Betätigungsvorrichtung gemäß Anspruch 1, **dadurch gekennzeichnet, dass** das jeweilige Formgedächtniselement (91, 94, 95, 591, 691) durch Bestromen erhitzt wird.

4. Betätigungsvorrichtung gemäß Anspruch 1, **dadurch gekennzeichnet, dass** das Formgedächtniselement (91, 94, 95, 591, 691) im Bereich seiner jeweiligen Enden mit elektrischen Anschlüssen oder Anschlussdrähte verbunden ist.

5. Betätigungsvorrichtung gemäß Anspruch 1, **dadurch gekennzeichnet, dass** alle für das entsprechende Bewegen des zu öffnenden Möbelteilstücks (21) benötigten Bauteile auf einer Platte, an einem Gestell oder in einem Gehäuse (31, 131, 231, 331, 431, 531, 631) angeordnet sind.

6. Betätigungsvorrichtung gemäß Anspruch 1, **dadurch gekennzeichnet, dass** die Antriebsvorrichtung (30, 130, 230, 330, 430, 530, 630) mindestens einen Schubschlitten (50, 250, 450) oder eine Seilrolle (340) aufweist, an der das Formgedächtniselement (91, 94, 95, 591, 691) angelenkt ist.

7. Betätigungsvorrichtung gemäß Anspruch 1, **dadurch gekennzeichnet, dass** das Kupplungselement ein Mitnahmezapfen (24), ein Aufschiebehebel (70, 270, 370, 670) oder eine Umlaufscheibe (470) mit einem Aufschiebezapfen (472) ist.

8. Betätigungsvorrichtung gemäß Anspruch 7, **dadurch gekennzeichnet, dass** das Kupplungselement (24, 70, 270, 370, 472, 670) beim Öffnen mindestens ein Möbelstückteil (21, 11) kontaktiert, ohne an diesem anzukuppeln.

9. Betätigungsvorrichtung gemäß Anspruch 1, **dadurch gekennzeichnet, dass** das Formgedächtniselement (91, 94, 95, 591, 691) aus einer Nickel-Titan-Legierung gefertigt ist.

10. Betätigungsvorrichtung gemäß mindestens einem der vorangegangenen Ansprüche, **dadurch gekennzeichnet, dass** das Formgedächtniselement (91, 94, 95, 591, 691) einen intrinsischen Zweiwegeffekt aufweist.

11. Betätigungsvorrichtung gemäß Anspruch 1, **dadurch gekennzeichnet, dass** das bewegliche Möbelstückteil (21) eine Schublade, eine Schiebetür, eine Dreh- oder Schwenktür, eine Klappe oder ein Ausfahrtisch ist.

## Claims

1. Actuating assembly configured to move a movable part (21) of a piece of furniture relative to a stationary part (11) of said piece of furniture, said moving taking place in opening or closing directions by drive means (30, 130, 230, 330, 430, 530, 630), said drive means comprising at least one shape memory element (91, 94, 95, 691), **characterized in that**
- either the drive means (30, 130, 230, 330, 430, 530, 630) is fixed to the stationary part (11) of the piece of furniture and temporarily engages the movable part (21, 22, 24, 425, 681, 683) through a drive-side coupling element (44, 70, 270, 370, 472, 670)
- or the drive means (30, 130, 230, 330, 430, 530, 630) is fixed to the movable part (21) of the piece of furniture and temporarily engages the stationary part (11) of the piece of furniture through a drive-side coupling element;
- the drive means (30, 130, 230, 330, 430, 530, 630), being a drive member moving said part (21) of the piece of furniture, comprises either a shape memory element (91, 94, 95, 691) contracting when heated or a spring energy storage element (561), with said spring energy storage element placed under tension by at least one shape memory element (591) contracting when heated; and
- the shape memory element (91, 94, 95, 591, 691) consists of a pull wire or of a bundle of pull wires.

2. Actuating assembly as claimed in claim 1, **characterized in that**, for generating a driving force, the shape memory element (91, 94, 95, 691) contracts when heated and reversibly extends when cooled.

3. Actuating assembly as claimed in claim 1, **characterized in that** the shape memory element (91, 94, 95, 591, 691) is heated by passing an electric current therethrough.

4. Actuating assembly as claimed in claim 1, **characterized in that** the shape memory element (91, 94, 95, 591, 691) is coupled at the ends thereof with electric terminals or connecting wires.

5. Actuating assembly as claimed in claim 1, **characterized in that** all the components needed for moving the part (21) to be opened of the piece of furniture are assembled on a plate, on a rack or in a housing (31, 131, 231, 331, 431, 531, 631).

6. Actuating assembly as claimed in claim 1, **characterized in that** the drive means (30, 130, 230, 330, 430, 530, 630) comprises at least one push slide (50, 250, 450) or a pulley (340) to which said shape memory element (91, 94, 95, 591, 691) is movably attached.

7. Actuating assembly as claimed in claim 1, **characterized in that** the coupling element comprises an entrainment peg (24), a push-on lever (70, 270, 370, 670) or a rotary disk (470) with a push-on peg (472).

8. Actuating assembly as claimed in claim 7, **characterized in that**, in the process of opening, the coupling element (24, 70, 270, 370, 472, 670) engages at least one part (21, 11) of the piece of furniture without being coupled thereto.

9. Actuating assembly as claimed in claim 1, **characterized in that** the shape memory element (91, 94, 95, 591, 691) is made from a nickel-titanium alloy.

10. Actuating assembly as claimed in at least one of the preceding claims, **characterized in that** the shape memory element (91, 94, 95, 591, 691) shows an intrinsic two-way memory effect.

11. Actuating assembly as claimed in claim 1, **characterized in that** the movable part (21) of a piece of furniture comprises a drawer, a sliding door, a rotating or pivoting door, a flap panel or an extending table.

## Revendications

1. Dispositif d'actionnement pour déplacer une partie mobile d'un meuble (21) dans une direction d'ouverture ou de fermeture par rapport à une partie fixe du meuble (11), au moyen d'un système d'entraînement (30, 130, 230, 330, 430, 530, 630) doté d'au moins un élément à mémoire de forme (91, 94, 95, 691), **caractérisé en ce**
- **que** le système d'entraînement (30, 130, 230, 330, 430, 530, 630) est fixé à la partie fixe du meuble (11) et vient se placer par moments contre la partie mobile du meuble (21, 22, 24, 425, 681, 683) par l'intermédiaire d'un élément de couplage du système d'entraînement (44, 70, 270, 370, 472, 670)
- ou que le système d'entraînement (30, 130, 230, 330, 430, 530, 630) est fixé à la partie mobile du meuble (21) et vient se placer par moments contre la partie fixe du meuble (11) par l'intermédiaire d'un élément de couplage du système d'entraînement,
- **que** le système d'entraînement (30, 130, 230, 330, 430, 530, 630) comprend, en tant qu'élément d'entraînement de la partie mobile du meuble (21), soit un élément à mémoire de forme (91, 94, 95, 691) qui se raccourcit lorsqu'il est chauffé, soit un accumulateur à ressort (561), l'accumulateur à ressort étant mis sous tension par au moins un élément à mémoire de forme (591) qui se raccourcit lorsqu'il est chauffé et
- **que** l'élément à mémoire de forme (91, 94, 95, 591, 691) comprend un fil de traction ou d'un faisceau de fils de traction.

2. Dispositif d'actionnement selon la revendication 1, **caractérisé en ce que** l'élément à mémoire de forme (91, 94, 95, 691) se raccourcit, pour la production d'une force de propulsion, lorsqu'il est chauffé et qu'il s'allonge à nouveau de façon réversible lorsqu'il refroidit.

3. Dispositif d'actionnement selon la revendication 1, **caractérisé en ce que** l'élément à mémoire de forme considéré (91, 94, 95, 591, 691) est chauffé par alimentation en courant.

4. Dispositif d'actionnement selon la revendication 1, **caractérisé en ce que** l'élément à mémoire de forme (91, 94, 95, 591, 691) est raccordé, au niveau de ses extrémités, à des connexions électriques ou à des fils de connexion.

5. Dispositif d'actionnement selon la revendication 1, **caractérisé en ce que** tous les composants nécessaires pour le mouvement de la partie du meuble à ouvrir (21) sont disposés sur une plaque, sur un bâti ou dans un boîtier (31, 131, 231, 331, 431, 531, 631).

6. Dispositif d'actionnement selon la revendication 1, **caractérisé en ce que** le dispositif d'entraînement (30, 130, 230, 330, 430, 530, 630) comprend au moins un chariot coulissant (50, 250, 450) ou une poulie (340) sur laquelle l'élément à mémoire de forme (91, 94, 95, 591, 691) est articulé.

7. Dispositif d'actionnement selon la revendication 1, **caractérisé en ce que** l'élément de couplage est un ergot d'entraînement (24), un levier d'ouverture (70, 270, 370, 670) ou un disque rotatif (470) avec un ergot d'ouverture (472).

8. Dispositif d'actionnement selon la revendication 7, **caractérisé en ce que** l'élément de couplage (24, 70, 270, 370, 472, 670) entre en contact lors de l'ouverture avec au moins une partie du meuble (21, 11) sans se raccorder à celui-ci.

9. Dispositif d'actionnement selon la revendication 1, **caractérisé en ce que** l'élément à mémoire de forme (91, 94, 95, 591, 691) est fabriqué à partir d'un alliage nickeltitane.

10. Dispositif d'actionnement selon au moins une des revendications précédentes, **caractérisé en ce que** l'élément à mémoire de forme (91, 94, 95, 591, 691) présente un effet de réversibilité intrinsèque.

11. Dispositif d'actionnement selon la revendication 1, **caractérisé en ce que** la partie mobile du meuble (21) est un tiroir, une porte coulissante, une porte tournante ou pivotante, une porte rabattable ou un plan de travail extensible.
